Europäisches Patentamt

European Patent Office

Office européen des brevets

(11) Numéro de publication: **0 406 139 A2**

# DEMANDE DE BREVET EUROPEEN

(21) Numéro de dépôt: 90440058.7

(22) Date de dépôt: 26.06.90

(51) Int. Cl.5: **A62B 17/00**

(30) Priorité: 26.06.89 FR 8908748

(43) Date de publication de la demande:
02.01.91 Bulletin 91/01

(84) Etats contractants désignés:
AT BE CH DE DK ES GB GR IT LI LU NL SE

(71) Demandeur: MATISEC S.A.
BP 433, Z.I. de St. Alban de Roche
F-38311 Bourgoin Jallieu(FR)

(72) Inventeur: **Carron, Gérard**
**rue des Rameaux, St Alban de Roche**
**F-38300 Bourgoin Jallieu(FR)**
Inventeur: **Frizon, Jacques**
**Pont de Maubec**
**F-38300 Bourgoin Jallieu(FR)**

(74) Mandataire: **Arbousse-Bastide, Jean-Claude**
**Philippe**
**Cabinet Maisonnier 28 rue Servient**
**F-69003 Lyon(FR)**

(54) Dispositif amovible pour l'assemblage étanche des gants et des bottes sur une combinaison de protection.

(57) Dispositif amovible pour l'assemblage étanche sur une combinaison (1) d'un gant (4) ou d'une botte (5) dont l'ouverture à paroi souple est cerclée d'une première bague rigide (7) dont elle est solidaire, destinée à venir s'adapter sur une deuxième bague rigide (8) dont est solidaire l'ouverture à paroi souple terminant la jambe (3) ou la manche (2) considérée.

La paroi souple de l'ouverture du gant (4) ou de la botte (5) est serrée entre un anneau (10) et la paroi intérieure (9) de la bague (7), le serrage de cet anneau (10) contre la paroi souple étant assuré par vissage d'un écrou annulaire (11) dans la paroi intérieure filetée de la première bague (7). La fixation amovible de la bague (7) sur la bague (8) étant obtenue à l'aide d'un assemblage à baïonnette dont la rotation relative assure le serrage dans le sens axial d'un joint d'étanchéité annulaire (15), une touche (21) à rappel élastique disposée sur l'extérieur des bagues (7), (8) assure automatiquement le verrouillage, dès que les bagues (7) et (8), sont en position correcte d'assemblage.

Fig 3

EP 0 406 139 A2

## DISPOSITIF AMOVIBLE POUR L'ASSEMBLAGE ETANCHE DES GANTS ET DES BOTTES SUR UNE COMBINAISON DE PROTECTION

La présente invention est relative à un dispositif amovible capable d'assurer l'assemblage étanche des gants et des bottes sur une combinaison-scaphandre de protection.

On sait que de telles combinaisons sont destinées à assurer la protection d'un utilisateur lorsque celui-ci séjourne ou travaille dans une atmosphère agressive ou dangereuse, comme c'est le cas notamment dans l'industrie chimique, l'industrie nucléaire, ou dans la lutte contre les incendies.

Une combinaison de protection comprend généralement un corps souple auquel on adapte de façon amovible :
- sur l'encolure, un casque ;
- à l'extrémité de chaque manche, un gant souple ;
- à l'extrémité de chaque jambe, une botte.

On sait que par ailleurs l'intérieur de la combinaison est ventilé à partir d'une arrivée d'air, à la fois pour permettre la respiration de l'utilisateur et pour éviter que de la buée n'apparaisse sur la visière transparente du casque. Dans tous les cas, un problème se pose pour que chaque assemblage soit :
- d'une part parfaitement étanche ;
- d'autre part facile à manipuler ;
- et enfin exempt de tous risques de fausses manoeuvres.

Enfin, on constate que les gants souples et les bottes constituent des pièces d'usures qu'on doit pouvoir remplacer facilement tout en conservant le même corps étanche pour la combinaison souple.

La présente invention vise à résoudre ce problème d'une façon particulièrement efficace en proposant un dispositif amovible pour l'assemblage étanche d'un gant ou d'une botte dont l'ouverture à paroi souple est cerclée d'une première bague rigide dont elle est solidaire, destinée à venir s'adapter sur une deuxième bague rigide dont est solidaire l'ouverture à paroi souple terminant la jambe ou la manche considérée, ce dispositif étant caractérisé en ce que :
- la paroi souple de l'ouverture du gant ou de la botte est serrée entre un anneau à paroi extérieure tronconique et la paroi intérieure de la première bague, tronconique à cet endroit, le serrage de cet anneau contre la paroi souple étant assuré par vissage d'un écrou annulaire dans la paroi intérieure filetée de la première bague ;
- dans la seconde bague, un dispositif analogue assure le serrage de l'extrémité souple de la manche ou de la jambe de la combinaison entre un anneau conique et la paroi interne tronconique correspondante ;
- la fixation amovible de la première bague sur la seconde bague étant obtenue à l'aide d'un assemblage à baïonnette dont la rotation relative assure le serrage dans le sens axial d'un joint d'étanchéité annulaire, sur l'extérieur des bagues une touche à rappel élastique assure automatiquement le verrouillage par interdiction de toute rotation relative, dès que la première et la seconde bague sont en position correcte d'assemblage étanche.

Le dessin annexé donné à titre d'exemple non limitatif permettra de mieux comprendre les caractéristiques de l'invention et les avantages qu'elle est susceptible de procurer. Dans ce dessin :

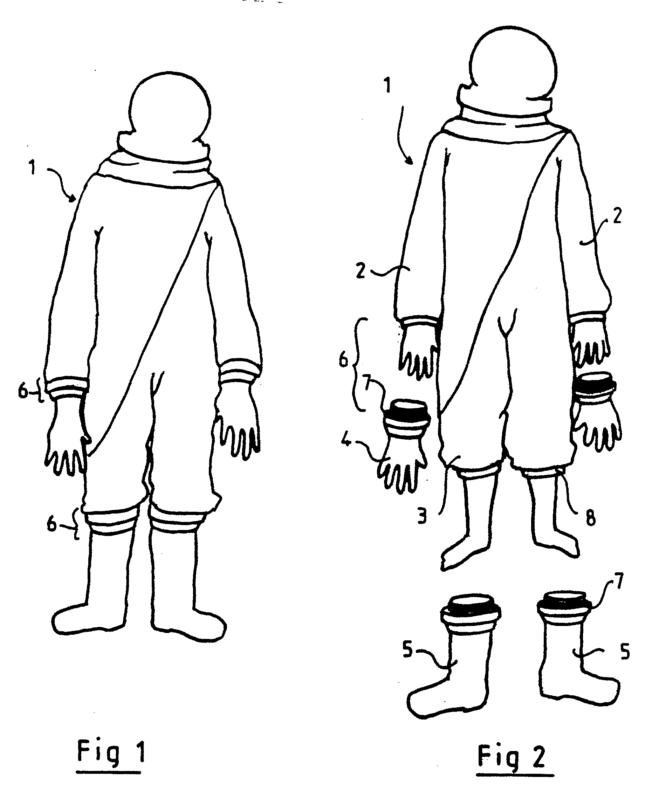

- la figure 1 représente l'ensemble d'une combinaison-scaphandre selon l'invention lorsqu'elle est assemblée.
- la figure 2 est une vue analogue avant assemblage des gants et des bottes de protection.
- la figure 3 est une vue éclatée du dispositif selon l'invention, pour raccorder le gant de la main gauche à la manche souple correspondante.
- la figure 4 est une coupe axiale de ce même dispositif après assemblage.

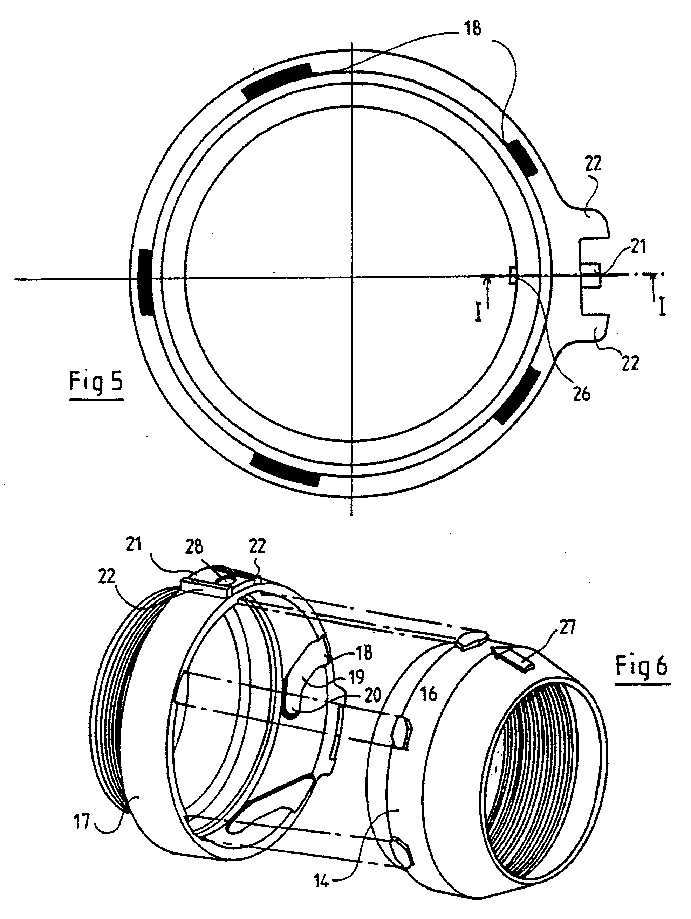

- la figure 5 est une vue de face de la deuxième bague suivant la direction de la flèche F de la figure 3.
- la figure 6 montre la première bague prête à être assemblée à la seconde.
- la figure 7 est une coupe suivant la ligne I-I de la figure 5 montrant la commande de verrouillage, en position de repos, assemblage verrouillé.
- la figure 8 est une coupe analogue quand l'utilisateur déverrouille la commande avant de séparer l'assemblage.

La combinaison scaphandre souple et étanche 1 représentée sur les dessins est du genre de celles qu'on utilise dans les usines chimiques ou dans les centrales nucléaires. Cette combinaison comporte deux manches 2 et deux jambes 3 auxquelles on raccorde respectivement deux gants souples 4 et deux bottes 5. Bottes et gants étant des pièces d'usure, c'est-à-dire susceptibles d'être usées ou détériorées en cours d'utilisation, il est nécessaire qu'elles soient facilement remplaçables. De plus, lorsque l'utilisateur se trouve à l'intérieur de la combinaison 1, il doit pouvoir manoeuvrer lui-même avec facilité les systèmes de raccordement et de débranchement des gants 4 ou des bottes 5.

La présente invention concerne précisément ce dispositif amovible 6 qui est présent entre chaque manche 2 et son gant 4, ainsi qu'entre chaque jambe 3 et sa botte 5. Dans la description qui va suivre, on détaillera un seul de ces dispositifs 6, étant bien entendu que le dimensionnement peut différer entre les dispositifs 6 des gants 4 et les dispositifs 6 des bottes 5.

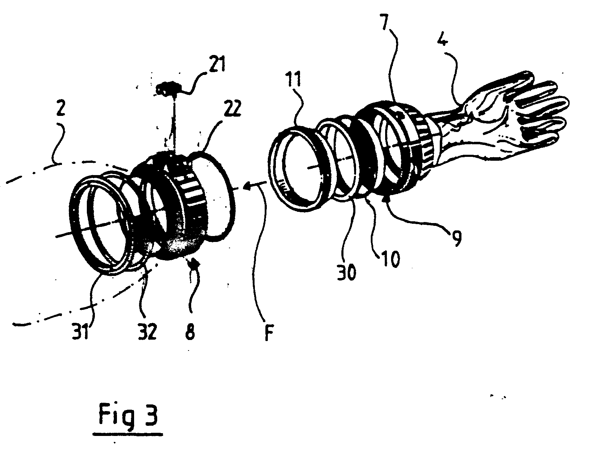

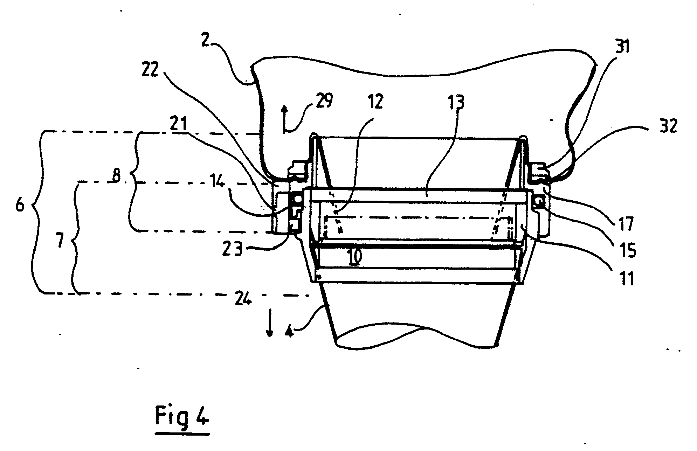

Dans l'exemple choisi, on décrira le dispositif 6 raccordant un gant 4 à sa manche 2 (voir figures 3 et 4).

Le dispositif 6 selon l'invention comprend une première bague rigide 7 solidaire de l'ouverture à paroi souple du gant 4, et une seconde bague rigide 8 solidaire de l'ouverture à paroi souple de la manche 2.

La paroi intérieure 9 de la première bague 7 est tronconique, convergeante en direction de l'extrémité du gant 4. Entre cette face interne tronconique 9 et un anneau intérieur tronconique amovible 10, est serrée la manchette d'ouverture souple du gant 4. Pour assurer ce serrage, on visse dans la partie filetée supérieure de la première bague 7, un écrou annulaire 11 qui porte sur l'extrémité la plus large de l'anneau 10.

Un dispositif analogue est prévu dans la seconde bague 8, pour la rendre solidaire de l'extrémité de la manche 2, dont la manchette terminale 12 dépasse en restant libre et souple à l'intérieur du dispositif 6 : à cet effet le serrage de la manche 2 dans la bague 8 est assuré par le vissage d'un écrou extérieur 31 contre la partie 17 qui forme une collerette d'appui annulaire, un joint annulaire 32 étant interposé entre l'écrou 31 et la manche 2.

A l'opposé de la partie tronconique 9, la première bague 7 se termine par une collerette cylindrique 13. Cette dernière comporte une paroi extérieure cylindrique lisse 14 susceptible de venir forcer de façon étanche contre un joint annulaire souple 15 prévu dans la deuxième bague 8 (voir figure 6).

Entre la collerette 13 et la partie tronconique 9 la première bague 7 comporte sur sa périphérie externe plusieurs ergots 16 constituant la partie mâle d'un assemblage à baïonnette. La partie femelle correspondante se trouve à l'intérieur de la partie terminale 17 de la deuxième bague 8. Elle est constituée, face à chaque ergot 16, par une encoche d'entrée 18, suivie d'une rampe oblique de serrage 19 terminée par un tronçon de blocage 20 orienté tangentiellement par rapport à la direction générale de la bague 8.

Pour assurer la fonction de détrompage, on veille à ce que les ergots 16 soient répartis irrégulièrement tout autour de la première bague 7, la même irrégularité dans leur position angulaire sur la bague étant observée pour la répartition des encoches 18 de la deuxième bague 8. Ainsi, lorsque l'utilisateur présente la première bague 7 devant la seconde bague 8 pour en assurer l'assemblage, une seule position angulaire relative est possible pour les deux bagues. Cela évite tout risque de fausse manoeuvre.

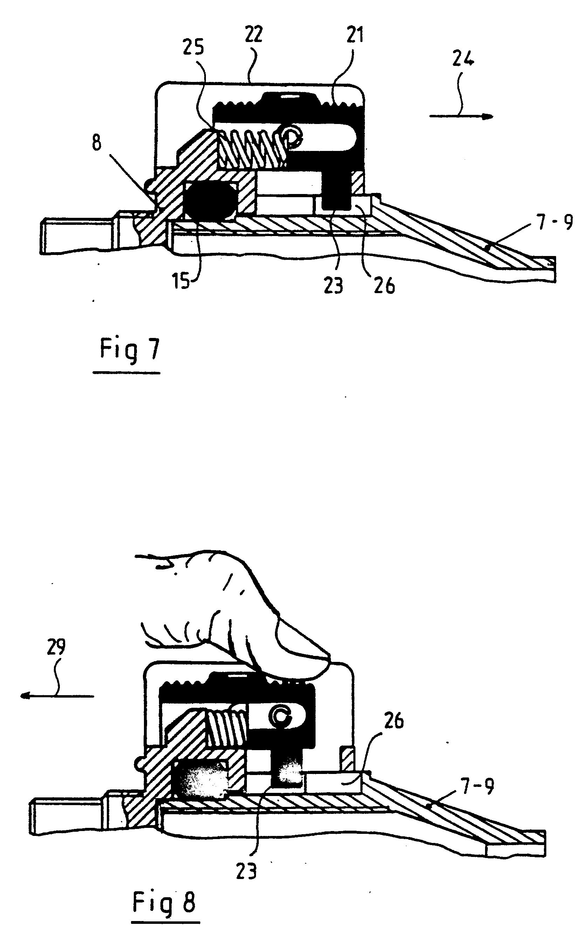

Une fois les deux bagues 7 et 8 engagées l'une dans l'autre puis bloquées à leur position d'assemblage étanche, le verrouillage de l'ensemble est assuré à partir d'une touche 21 prévue sur la périphérie de la deuxième bague 8, entre deux bossages protecteurs fixes 22 faisant saillie vers l'extérieur. La touche 21 est solidaire d'un doigt radial 23 (figure 7) qui dépasse vers l'intérieur de la deuxième bague 8. L'ensemble de la touche 21 et de son doigt 23 est mobile dans le sens axial figuré par la flèche 24, sous l'action d'un ressort de rappel 25. Lorsque l'ensemble est au repos, avec les deux bagues 7 et 8 assemblées (figures 4 et 7), le ressort 25 maintient le doigt 23 engagé dans une encoche longitudinale 26 creusée à la périphérie extérieure de la première bague 7. Celle-ci se trouve ainsi verrouillée contre tous déplacements angulaires relatifs à l'intérieur de la deuxième bague 8, si bien que chaque ergot 16 est alors bloqué dans le tronçon terminal de verrouillage 20 de sa rainure.

Pour faciliter l'utilisation, on prévoit sur l'extérieur de la première bague 7 un index de repérage 27, alors qu'un index de repérage 28 est prévu en correspondance sur la deuxième bague 8. L'utilisateur sait que s'il présente les deux index 27 et 28 face à face, chaque ergot 16 de la bague 8 de trouvera face à son encoche d'entrée 18.

Il résulte de ce qui précède que :
- d'une part en dévissant l'écrou 11 et en retirant l'anneau 10, il est facile de remplacer le gant souple 4 ou la botte dont est pourvue la première bague 7 ;
- il en va de même pour la fixation de la deuxième bague 8 sur la manche 2 ou sur une jambe 3 ;
- en utilisation normale, c'est-à-dire quand l'utilisateur s'habille ou se déshabille, la manoeuvre du dispositif est extrêmement simple : s'il pousse la touche 21 dans le sens de la flèche 29, c'est-à-dire à l'encontre du ressort de compression 25 (figure 8), il dégage l'ergot de verrouillage 23 de l'encoche 26 et peut alors défaire l'assemblage à baïonnette 16, 18 ; si par contre il actionne l'assemblage à baïonnette 16, 18 pour l'amener en position de verrouillage, le doigt 23 s'engage automatiquement dans la rainure de verrouillage 26 lorsque celle-ci parvient à sa hauteur.

A titre de complément, on peut intercaler entre l'écrou 11 et l'anneau conique 10 un joint annulaire souple 30 travaillant à la compression.

**Revendications**

1) Dispositif amovible pour l'assemblage étanche sur une combinaison (1) d'un gant (4) ou d'une botte (5) dont l'ouverture à paroi souple est cerclée d'une première bague rigide (7) dont elle est solidaire, destinée à venir s'adapter sur une deuxième bague rigide (8) dont est solidaire l'ouverture à paroi souple terminant la jambe (3) ou la manche (2) considérée, caractérisé en ce que :

- la paroi souple de l'ouverture du gant (4) ou de la botte (5) est serrée entre un anneau (10) à paroi extérieure tronconique et la paroi intérieure (9) de la première bague (7), tronconique à cet endroit, le serrage de cet anneau (10) contre la paroi souple étant assuré par vissage d'un écrou annulaire (11) dans la paroi intérieure filetée de la première bague (7) ;

- dans la seconde bague (8) un dispositif étanche assure le serrage de l'extrémité souple (12) de la manche (2) ou de la jambe (3) de la combinaison (1) entre un anneau et la paroi d'appui correspondante ;

- la fixation amovible de la première bague (7) sur la seconde bague (8) étant obtenue à l'aide d'un assemblage à baïonnette dont la rotation relative assure le serrage dans le sens axial d'un joint d'étanchéité annulaire (15), une touche (21) à rappel élastique disposée sur l'extérieur des bagues (7), (8) assure automatiquement le verrouillage par interdiction de toute rotation relative, dès que la première et la seconde bague (7), (8), sont en position correcte d'assemblage.

2) Dispositif suivant la revendication 1, caractérisé en ce qu'à l'opposé de la partie tronconique (9), la première bague (7) se termine par une collerette cylindrique (13) comportant une paroi extérieure cylindrique lisse (14) susceptible de venir forcer de façon étanche contre un joint annulaire souple (15) prévu dans la deuxième bague (8).

3) Dispositif suivant la revendication 1, caractérisé en ce qu'entre la collerette (13) et la partie tronconique (9), la première bague (7) comporte sur sa périphérie externe plusieurs ergots (16) constituant la partie mâle de l'assemblage à baïonnette, alors que la partie femelle correspondante se trouve à l'intérieur de la partie terminale (17) de la deuxième bague (8) étant constituée, face à chaque ergot (16), par une encoche d'entrée (18) suivie d'une rampe oblique de serrage (19) terminée par un tronçon de blocage (20) orienté tangentiellement par rapport à la direction générale de la deuxième bague (8).

4) Dispositif suivant l'une quelconque des revendications précédentes, caractérisé en ce que, pour assurer la fonction de détrompage, les ergots (16) sont répartis irrégulièrement tout autour de la première bague (7), la même irrégularité dans leur position angulaire sur la bague (8) étant observée pour la répartition des encoches (18) de la deuxième bague (8) si bien qu'une seule position angulaire relative est possible pour les deux bagues (7), (8).

5) Dispositif suivant l'une quelconque des revendications précédentes, caractérisé en ce que le verrouillage de l'ensemble est assuré à partir d'une touche (21) disposée sur la périphérie de la deuxième bague (8), entre deux bossages protecteurs fixes (22) faisant saillie vers l'extérieur, cette touche (21) étant solidaire d'un doigt radial (23) qui fait saillie vers l'intérieur de la deuxième bague (8) et avec lequel elle est mobile en translation axiale, sous l'action d'un ressort de rappel (25), si bien que si l'ensemble est au repos, les deux bagues (7) et (8) assemblées, le ressort (25) maintient le doigt (23) engagé dans une encoche longitudinale (26) ménagée à la périphérie extérieure de la première bague (7).

6) Dispositif suivant l'une quelconque des revendications précédentes, caractérisé en ce que sur l'extérieur de la première bague (7) est disposé un index de repérage (27), alors qu'un index de repérage (28) est disposé en correspondance sur la deuxième bague (8), si bien que lorsqu'on présente les deux index (27) et (28) face à face, chaque ergot (16) de la bague (8) se trouve face à son encoche d'entrée (18).

7) Dispositif suivant l'une quelconque des revendications précédentes, caractérisé en ce qu'on intercale entre l'écrou (11) et l'anneau conique (10) un joint annulaire souple (30) travaillant à la compression.

8) Dispositif suivant l'une quelconque des revendications précédentes, caractérisé en ce que le serrage de la manche (2) dans la seconde bague (8) est assuré par le vissage d'un écrou extérieur (31) contre la partie (17) qui forme une collerette d'appui annulaire.

Fig 1

Fig 2

## Fig 3

Fig 4

7

Fig 5

Fig 6

Fig 7

Fig 8